# EUROPEAN PATENT SPECIFICATION

(11) **EP 3 148 004 B1**
(45) Date of publication and mention of the grant of the patent: **10.03.2021**
(21) Application number: 16190627.6
(22) Date of filing: 26.09.2016
(51) Int. Cl.: H01R 4/30, F16B 41/00

(54) **WIRE LUG CAPTIVATION SYSTEM AND METHOD**
DRAHT-ÖSE-ERFASSUNGSSYSTEM UND -VERFAHREN
SYSTÈME ET PROCÉDÉ DE CAPTURE DE COSSE DU FIL

(30) Priority: 25.09.2015 US 201514864970
(43) Date of publication of application: 29.03.2017
(73) Proprietor: Hamilton Sundstrand Corporation, Charlotte, NC 28217 (US)
(72) Inventor: BELISLE, Francis C., Roscoe, IL Illinois 61073 (US)
(74) Representative: Dehns

(56) References cited:
- WO-A1-2011/106935
- DE-A1- 4 142 034
- DE-C- 726 300
- DE-C1- 19 821 160
- FR-A1- 2 333 362

## Description

### BACKGROUND OF THE INVENTION

The present invention is related to electric connection and, in particular, to facilitate connecting feeder lug to a terminal block.

In many instances a machine, such as a dynamoelectric machine, is contained on a vehicle such as an air craft. A dynamoelectric machine is any type of machine that can generate motion from electricity or vice-versa and includes, for example, motors and generators. Regardless of whether the machine is a motor or a generator, feeder lines are used to transfer electrical power either into or out of the internal portions of the machine. Of course other types of machines on a vehicle such as an aircraft may also be powered by feeder lines.

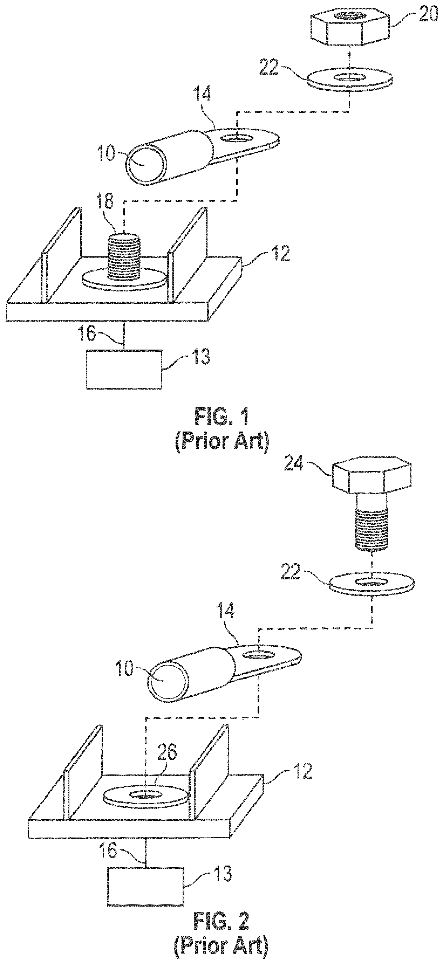

As illustrated in FIG. 1, a feeder line 10 that is to be connected to a terminal block 12 of a machine via a feeder lug 14. As illustrated, electrical power is transferred between the feeder line 10 and an internal connection 16 a machine 13. The connection path includes the feeder lug 14 which is attached to and secured on a terminal stud 18 by a fastener or nut 20. An optional washer 22 may also be included. The terminal stud 18 is also in electrical communication with a terminal lead 22 that is in electrical communication with the internal connection 16. Of course, other means of transferring electrical power to the internal connection may exist.

To connect the feeder lug 14 to provide power, the feeder lug 14 placed over the stud 18 and then the nut/washer (20, 22) combo is attached. The feeder line 10 may be difficult to arrange requiring that the installer hold it and the lug 14 on the terminal 12 and place the nut/washer (20, 22) combo on with the other hand. In those cases (and others), one or both of the nut 20 and washer 22 may fall or otherwise become unreachable in the installation.

Another approach is to use a terminal block 12 as shown in FIG. 2. In this case, rather than including a stud 18, the block 12 includes a threaded insert 26 into which a bolt 24 is inserted. Like above, such a configuration may be difficult to attach the lug 14 to and one or both of the bolt and washer 22 may be dropped/lost. DE 726300 describes methods of connecting electrical line wires by means of a screw and washer.

### BRIEF DESCRIPTION OF THE INVENTION

DELETED

An assembly is described herein and defined in claim 1.

A method of connecting a terminal lug to a terminal is also disclosed herein and defined in claim 6.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of a feeder lug coupled to a terminal block with a terminal stud according to the prior art;
FIG. 2 is a perspective view of a feeder lug coupled to a terminal block with a terminal insert according to the prior art;
FIG. 3 is an exploded view of a wire lug captivation system according to one embodiment;
FIG. 4 is a side-view of a bolt that may be used in a wire lug captivation system according to one embodiment;
FIG. 5 is perspective view of a captivation device according to one embodiment; and
FIG. 6 shows an assembled captivation system prior to being connected to a terminal.

### DETAILED DESCRIPTION OF THE INVENTION

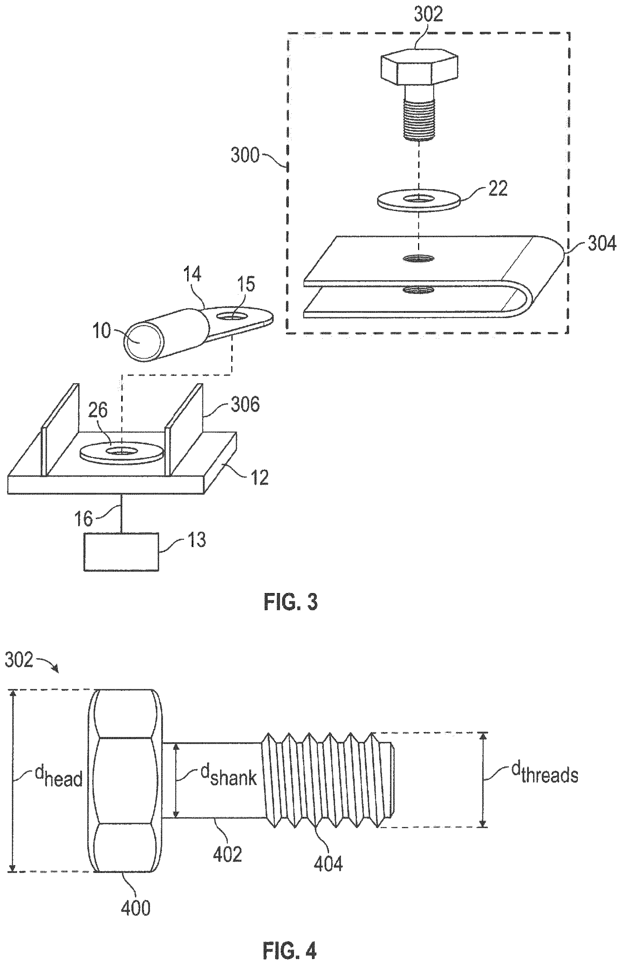

FIG. 3 shows an example of a wire lug captivation system according to one embodiment. The system 300 is to be connected to include a feeder line 10 that is to be connected to a terminal block 12 of a machine via a feeder lug 14. As illustrated, electrical power is transferred between the feeder line 10 and an internal connection 16 a machine 13.

With reference now to FIGs. 3-5, the terminal block 12 in this embodiment includes a threaded insert 26 into which a bolt 302 is inserted. The bolt 302 is, in one embodiment, includes a head 400, a shank 402 and a threaded portion 404. The shank 402 has a diameter, dₛₕₐₙₖ, that is less than the diameter, d_{threads}, of the threads 400. The head 400 could be any shape and may be manipulated (e.g., turned) by any type of device). For example, the head 400 could be a hex-head that that is turned by a socket wrench or it could a slot or phillips-shaped groove such that in can be rotated by a screw driver. The head 400 has a diameter, d_{head}, that is greater than both dₛₕₐₙₖ and d_{threads} in one embodiment. As illustrated, the shank 402 does not include threads.

The system 300 also includes a captivation device 304. The captivation device 304 is sized and arranged such that the lug 14 may be inserted into it and then the bolt 302 passed through both the captivation device 304 and the hole 15 in lug 14 and then screwed into the threads 26 in the insert 12. The bolt 302 may also pass through optional washer 22 before passing through the captivation device 304.

The captivation device 304 may include an upper portion 502 and a lower portion 504. The upper and lower portions 502, 504 are connected by a connection portion 510. As illustrated, the connecting portion 510 is arcuate. While not illustrated it shall be understood that another connecting portion may be included on an opposing side of the upper and lower portions 502, 504 in one embodiment. Further, the particular shape of the connecting member 510 is not limited to arcuate. In one embodiment, and captivation device 304 may be formed by compressing a tubular section of a conductive metal (e.g., copper_ pipe.

The upper portion 502 includes a hole 508 formed there through that includes threads 506. An inner diameter of the threads 506 is larger than the diameter of the shank dₛₕₐₙₖ in one embodiment. The lower portion 504 includes a hole 511 that is concentric with hole 508 and has a diameter larger than the diameter of the threads d_{threads}.

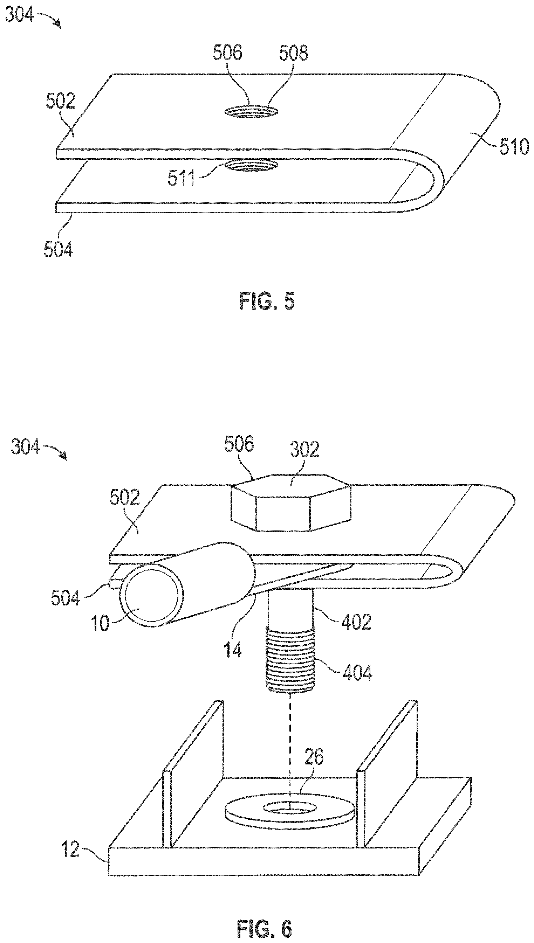

As best seen in FIG. 6, lug 14 may be inserted between the upper and lower portions 502, 504. Then, the bolt 302 be threaded through the threads in the upper portion 502, and passed through the lower portion 504 (and optionally, the washer 22). The shank 402 may extend slightly below the lower portion 502 in one embodiment but in another it may only extent beyond a bottom edge of the threads 506 (FIG. 5) of the upper portion 502. The assembly of the lug 14, bolt, 302 and captivation device 304 will stay together and can then be easily arranged over and screwed into the threads 26 of the terminal 12. Advantageously, such a configuration may lead to reduction is the dropping or loss of the bolt 302 as was experience in some instances as described above.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An assembly comprising:
a bolt (302) having a head (400), a shank (402) adjacent the head (400) and a threaded portion (404), the shank (402) having a diameter that is smaller than a diameter of the threaded portion (404);
a captivation device (304) including an upper portion (502), a lower portion (504) and a connecting member that joins the upper (502) and lower portions (504), the upper portion (502) including a threaded hole (508) having a diameter that is greater than the diameter of the shank (402) and a lower hole (511) in the lower portion;
a wire lug (14) including at least partially disposed between the upper portion (502) and the lower portion (504) and including a lug hole aligned with the threaded hole and the lower hole;
wherein the bolt (302) passes through the threaded hole, the lower hole and the lug hole such that the shank portion is within the threaded hole (508);
and **characterized in that** the lower hole (511) is larger than and concentric with the threaded hole (508).

2. The assembly of claim 1, further comprising:
a washer (22) disposed between the head (400) and the upper portion (502).

3. The assembly of claim 1 or 2, wherein threaded hole (508)
is sized to mate
with the threaded portion of the bolt (302).

4. The assembly of claim 1, 2 or 3, wherein the connecting member is arcuate.

5. The assembly of any of claims 1 to 4, wherein the captivation device (304) is formed of a conductive metal.

6. A method of connecting a terminal lug to a terminal comprising:
providing a bolt (302) having a head (400), a shank (402) adjacent the head (400) and a threaded portion (404), the shank (402) having a diameter that is smaller than a diameter of the threaded portion (404);
providing a captivation device (304) including an upper portion (502), a lower portion (504) and a connecting member that joins the upper (502) and lower portions (504), the upper portion(502) including a threaded hole (508) having a diameter that is greater than the diameter of the shank (402) and a lower hole (511) in the lower portion;
disposing a wire lug (14) including at least partially disposed between the upper portion (502) and the lower portion (504) and including a lug hole aligned with the threaded hole (508) and the lower hole (511); and
threading and urging the bolt (302) through the upper portion (502) until the bolt (302) passes through the threaded hole, the lower hole and the lug hole such that the shank portion is within the threaded hole (508);
and **characterized in that** the lower hole (511) is larger than and concentric with the threaded hole (508).

## Patentansprüche

1. Baugruppe, umfassend:
einen Bolzen (302) mit einem Kopf (400), einem Schaft (402) benachbart zu dem Kopf (400) und einem Gewindeabschnitt (404), wobei der Schaft (402) einen Durchmesser aufweist, der kleiner ist als ein Durchmesser des Gewindeabschnitts (404);
eine Festhaltevorrichtung (304), die einen oberen Abschnitt (502), einen unteren Abschnitt (504) und ein Verbindungselement beinhaltet, das den oberen (502) und den unteren Abschnitt (504) miteinander verbindet, wobei der obere Abschnitt (502) eine Gewindebohrung (508) mit einem Durchmesser beinhaltet, der größer ist als der Durchmesser des Schaftes (402) und einer unteren Bohrung (511) in dem unteren Abschnitt;
eine Draht-Öse (14), die mindestens teilweise zwischen dem oberen Abschnitt (502) und dem unteren Abschnitt (504) angeordnet ist und eine Ösenbohrung beinhaltet, die mit der Gewindebohrung und der unteren Bohrung ausgerichtet ist;
wobei der Bolzen (302) durch die Gewindebohrung, die untere Bohrung und die Ösenbohrung derart verläuft, dass sich der Schaftabschnitt innerhalb der Gewindebohrung (508) befindet; und **dadurch gekennzeichnet, dass**
die untere Bohrung (511) größer als die Gewindebohrung (508) und konzentrisch mit dieser angeordnet ist.

2. Baugruppe nach Anspruch 1, ferner umfassend:
eine Unterlegscheibe (22), die zwischen dem Kopf (400) und dem oberen Abschnitt (502) angeordnet ist.

3. Baugruppe nach Anspruch 1 oder 2, wobei die Gewindebohrung (508) derart bemessen ist, dass sie mit dem Gewindeabschnitt des Bolzens (302) zusammenpasst.

4. Baugruppe nach Anspruch 1, 2 oder 3, wobei das Verbindungselement bogenförmig ist.

5. Baugruppe nach einem der Ansprüche 1 bis 4, wobei die Festhaltevorrichtung (304) aus einem leitfähigen Material gebildet ist.

6. Verfahren zum Verbinden einer Anschluss-Öse mit einem Anschluss, umfassend:
Bereitstellen eines Bolzens (302) mit einem Kopf (400), einem Schaft (402) benachbart zu dem Kopf (400) und einem Gewindeabschnitt (404), wobei der Schaft (402) einen Durchmesser aufweist, der kleiner ist als der Durchmesser des Gewindeabschnitts (404);
Bereitstellen einer Festhaltevorrichtung (304), die einen oberen Abschnitt (502), einen unteren Abschnitt (504) und ein Verbindungselement beinhaltet, das den oberen (502) und den unteren Abschnitt (504) miteinander verbindet, wobei der obere Abschnitt (502) eine Gewindebohrung (508) mit einem Durchmesser beinhaltet, der größer ist als der Durchmesser des Schaftes (402) und einer unteren Bohrung (511) in dem unteren Abschnitt;
Anordnen einer Draht-Öse (14) derart, dass sie mindestens teilweise zwischen dem oberen Abschnitt (502) und dem unteren Abschnitt (504) angeordnet ist und dass eine Ösenbohrung mit der Gewindebohrung (508) und der unteren Bohrung (511) ausgerichtet ist; und
Einschrauben und Treiben des Bolzens (302) durch den oberen Abschnitt (502), bis der Bolzen (302) durch die Gewindebohrung, die untere Bohrung und die Ösenbohrung derart verläuft, dass sich der Schaftabschnitt innerhalb der Gewindebohrung (508) befindet;
und **dadurch gekennzeichnet, dass** die untere Bohrung (511) größer als die Gewindebohrung (508) und konzentrisch mit dieser angeordnet ist.

## Revendications

1. Ensemble comprenant :
un boulon (302) ayant une tête (400), une tige (402) adjacente à la tête (400) et une partie filetée (404), la tige (402) ayant un diamètre qui est inférieur à un diamètre de la partie filetée (404) ;
un dispositif de capture (304) comportant une partie supérieure (502), une partie inférieure (504) et un élément de raccordement qui relie les parties supérieure (502) et inférieure (504), la partie supérieure (502) comportant un trou fileté (508) ayant un diamètre qui est supérieur au diamètre de la tige (402) et un trou inférieur (511) dans la partie inférieure ;
une cosse de fil (14) étant au moins partiellement disposée entre la partie supérieure (502) et la partie inférieure (504) et comportant un trou de cosse aligné avec le trou fileté et le trou inférieur ;
dans lequel le boulon (302) passe à travers le trou fileté, le trou inférieur et le trou de cosse de sorte que la partie de tige se trouve à l'intérieur du trou fileté (508) ; et **caractérisé en ce que**
le trou inférieur (511) est plus grand et concentrique avec le trou fileté (508).

2. Ensemble selon la revendication 1, comprenant en outre :
une rondelle (22) disposée entre la tête (400) et la partie supérieure (502).

3. Ensemble selon la revendication 1 ou 2, dans lequel le trou fileté (508) est dimensionné pour s'accoupler avec la partie filetée du boulon (302).

4. Ensemble selon la revendication 1, 2 ou 3, dans lequel l'élément de raccordement est arqué.

5. Ensemble selon l'une quelconque des revendications 1 à 4, dans lequel le dispositif de capture (304) est formé d'un métal conducteur.

6. Procédé de raccordement d'une cosse de borne à une borne comprenant :
la fourniture d'un boulon (302) ayant une tête (400), une tige (402) adjacente à la tête (400) et une partie filetée (404), la tige (402) ayant un diamètre qui est inférieur à un diamètre de la partie filetée (404) ;
la fourniture d'un dispositif de capture (304) comportant une partie supérieure (502), une partie inférieure (504) et un élément de raccordement qui relie les parties supérieure (502) et inférieure (504), la partie supérieure (502) comportant un trou fileté (508) ayant un diamètre qui est supérieur au diamètre de la tige (402) et un trou inférieur (511) dans la partie inférieure ;
la disposition d'une cosse de fil (14) étant au moins partiellement disposée entre la partie supérieure (502) et la partie inférieure (504) et comportant un trou de cosse aligné avec le trou fileté (508) et le trou inférieur (511) ; et
le filetage et le pressage du boulon (302) à travers la partie supérieure (502) jusqu'à ce que le boulon (302) passe à travers le trou fileté, le trou inférieur et le trou de cosse de sorte que la partie de tige se trouve à l'intérieur du trou fileté (508) ;
et **caractérisé en ce que** le trou inférieur (511) est plus grand et concentrique avec le trou fileté (508).
